## Europäisches Patentamt

## European Patent Office

## Office européen des brevets

(19)

(11) Veröffentlichungsnummer: **0 052 153**
**B1**

(12) **EUROPÄISCHE PATENTSCHRIFT**

(45) Veröffentlichungstag der Patentschrift:
18.07.84

(51) Int. Cl.³: **B 60 G 3/18**

(21) Anmeldenummer: 80107071.5

(22) Anmeldetag: 14.11.80

(54) Einzelradaufhängung für nicht gelenkte Räder von Kraftfahrzeugen, insbesondere Personenkraftwagen.

(43) Veröffentlichungstag der Anmeldung:
26.05.82 Patentblatt 82/21

(45) Bekanntmachung des Hinweises auf die Patenterteilung:
18.07.84 Patentblatt 84/29

(84) Benannte Vertragsstaaten:
DE FR GB IT SE

(56) Entgegenhaltungen:
DE - A - 2 038 880
DE - A - 2 712 185
DE - A - 2 913 651
DE - C - 968 177

AUTOMOBILTECHNISCHE ZEITSCHRIFT, Band 73, Nr. 7, 1971, Stuttgart W. MATSCHINSKY "Zur Analyse und Synthese räumlicher Einzelradaufhängungen" Seiten 247 bis 254

(73) Patentinhaber: **BAYERISCHE MOTOREN WERKE Aktiengesellschaft, Postfach 40 02 40, D-8000 München 40 (DE)**

(72) Erfinder: **Kosak, Werner, Dipl.-Ing., Thomas-Schwarz-Strasse 43a, D-8060 Dachau (DE)**
Erfinder: **Pauly, Axel, Dr. Ing., Griegstrasse 23, D-8000 München 40 (DE)**

(74) Vertreter: **Dexheimer, Rolf, c/o Bayerische Motoren Werke Aktiengesellschaft Postfach 40 02 40, D-8000 München 40 (DE)**

## Beschreibung

Die Erfindung betrifft eine Einzelradaufhängung für nicht gelenkte Räder von Kraftfahrzeugen, insbesondere von Personenkraftwagen, gemäß der im Oberbegriff des Hauptanspruches beschriebenen Bauart.

Bei einer derartigen Einzelradaufhängung kann allein durch die längselastische Anordnung des Radträger-Längsarmes am Fahrzeugaufbau durch Längs- bzw. Umfangskräfte sowie durch Seitenkräfte am Rad ein nachteiliges Vorspurverhalten auftreten.

Der Erfindung liegt die Aufgabe zugrunde, eine Einzelradaufhängung der im Oberbegriff des Hauptanspruches beschriebenen Bauart so weiterzubilden, daß eine aus Komfortgründen gewünschte, elastische Längsfederung ohne unerwünschtes Vorspurverhalten erreicht wird.

Diese Aufgabe ist mit den im Kennzeichen des Hauptanspruches angegebenen Mitteln gelöst.

Mit der Erfindung ist eine Einzelradaufhängung erreicht mit dem Vorteil der Erzielung gewünschten Vorspurverhaltens bei durch Längs- und/oder Seitenkräften bewirkter elastischer Längsfederung.

Durch die erfindungsgemäße Anordnung der Anlenkungen der Querlenker und des Längsarm-Gelenkes sowie dessen Ausgestaltung als elastisches Lager mit unterschiedlich gerichteten Federraten einerseits und der Zuordnung der aus Längs- und/oder Seitenkraft am Gelenk resultierenden Kraft zu der vorwiegend in Fahrzeugquerrichtung wirkenden Federrate $C_1$ andererseits kann mit den in Anspruch 2 genannten Winkeln und dem Federratenverhältnis für das längselastisch gefederte Rad der Einzelradaufhängung festgelegt werden, ob das Rad bei einer Längsfederung durch eine Längskraft (Bremsen, Antreiben) oder/und Seitenkraft (Kurvenfahrt) in Vorspur geht oder die vorgegebene Vorspur beibehält oder die Vorspur verringert wird.

In weiterer Ausgestaltung der Erfindung mit Merkmalen des Anspruches 3 und einer in Abhängigkeit der verschiedenen Winkeln getroffenen Abstimmung der Federraten $C_1$ und $C_2$ ist erreicht, daß der Anlenkpunkt des Längsarmes sowohl bei Belastung durch Längskraft oder/und Seitenkraft unter der jeweils resultierenden Kraft am Lager eine Verschiebung senkrecht zur Richtung der Ersatzgeraden der Querlenker erfährt. Damit ist in vorteilhafter Weise erreicht, daß der gesamte Radträger eine Translation ohne Vorspuränderung des Rades bzw. ohne unerwünschte Lenkbewegung durchführt.

Ein gewünschtes Vorspurverhalten in Richtung Vorspur beim Bremsen und bei Kurvenfahrt am kurvenäußeren Rad sowie in Richtung Nachspur beim Antreiben und bei Kurvenfahrt am kurveninneren Rad ist bei einer Ausgestaltung der Einzelradaufhängung nach Merkmalen des Anspruches 4 erzielt.

Wird die erfindungsgemäße Einzelradaufhängung nach Merkmalen des Anspruches 5 weitergebildet, so ergeben sich zwei, in verschiedenen Richtungen am Lager des Längsarmes wirkende resultierende Kraftrichtungen aus der Radlängs- und der Seitenkraft. Daraus ergibt sich der Vorteil eines differenzierten Vorspurverhaltens bei Radlängs- und Seitenkraft. Wird insbesondere das Verhältnis der Federraten $C_1$ und $C_2$ so gewählt, daß bei Längskraft keine Vorspuränderung eintritt — Anlenkpunkt des Längsarmes bewegt sich senkrecht zur Richtung der Ersatzgeraden der Querlenker — so ist bei Radseitenkraft eine Vorspuränderung in Richtung Vorspur realisierbar. Auf diese Weise lassen sich z. B. im Hinblick auf ein günstiges Vorspurverhalten nachteilige Verformungen elastischer Lager in den Anlenkungen der Querlenker vorteilhaft ausgleichen.

Das erfindungsgemäße Lager des Längsarmes kann auf einfachste Weise durch eine gummielastische Drehschubfeder verwirklicht werden.

In weiterer Ausgestaltung der Erfindung nach Merkmalen des Anspruches 7 ist eine Einzelradaufhängung erzielt, bei der der Vorteil eines günstigen Vorspurverhaltens bei elastischer Längsfederung mit dem Vorteil eines günstigen Vorspurverhaltens bei gewünscht kleiner Sturzänderung beim Ein- und Ausfedern kombiniert ist.

Die Erfindung ist anhand zweier in der Zeichnung schematisch dargestellter Ausführungsbeispiele beschrieben. Die Zeichnung zeigt in

Fig. 1 eine Einzelradaufhängung, bei der die Ersatzgerade der Querlenker-Anlenkungen sich im Schnittpunkt von Radlängs- und Seitenkraft schneidet,

Fig. 2 den Kräfteplan im Längsarm-Gelenk für eine Radaufhängung gemäß Fig. 1,

Fig. 3 eine Einzelradaufhängung, bei der die Ersatzgerade der Querlenker-Anlenkungen sich mit der Radlängskraft hinter der in Fahrtrichtung vorne gelegenen Wirkungslinie der Seitenkraft schneidet,

Fig. 4 den Kräfteplan im Längsarm-Gelenk für eine Radaufhängung gemäß Fig. 3.

Ein Rad 1 einer Einzelradaufhängung für nicht gelenkte Räder eines nicht dargestellten Personenkraftwagens ist mit einem Radträger 2 verbunden, der einen in Fahrzeuglängsrichtung gemäß Pfeil »A« nach vorne gerichteten Längsarm 3 aufweist und über den Längsarm 3 sowie zwei etwa quer zur Fahrzeuglängsrichtung weisende, übereinander angeordnete Querlenker 4 und 5 mit dem Fahrzeugaufbau gelenkig verbunden ist. Der Längsarm 3 ist über ein Gelenk 6 mit dem Fahrzeugaufbau verbunden, während die Querlenker 4 und 5 über Anlenkungen 7 und 8 mit dem Fahrzeugaufbau in Verbindung stehen. Radseitig sind die Querlenker 4 und 5 über Anlenkungen 9 und 10 mit dem Radträger 2 verbunden.

Die radseitigen Anlenkungen 9 und 10 sind bei der in Draufsicht gezeigten Einzelradaufhängung im Bereich einer durch die Radmitte verlaufenden, mittels der Geraden 11 versinnbildlichten Querebene ober- bzw. unterhalb der Radachse 12 angeordnet.

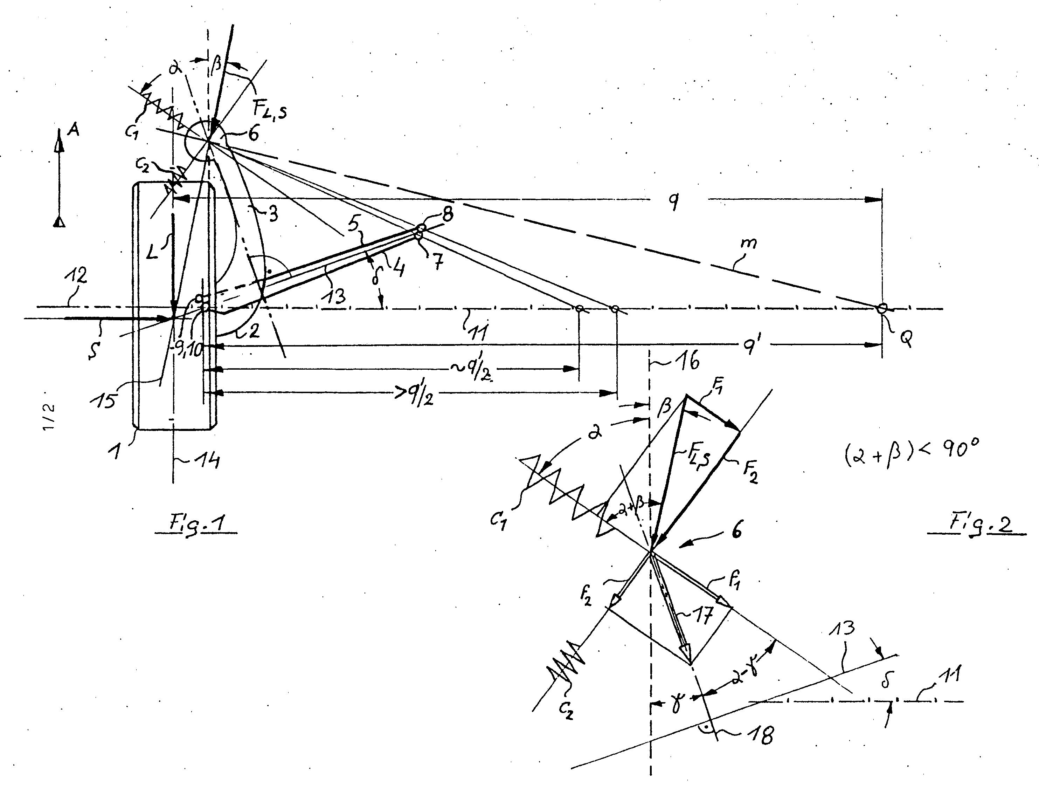

Wie aus Fig. 1 hervorgeht, sind das Gelenk 6 des Längsarmes 3 sowie die aufbauseitigen Anlenkungen 7 und 8 der Querlenker 4 und 5 in Fahrzeuglängsrichtung gemäß Pfeil »A« vor der Radachse 12 bzw. der Querebene 11 angeordnet. Dabei schließt eine durch die aufbauseitigen Anlenkungen 7 und 8 sowie die radseitigen Anlenkungen 9 und 10 gemittelt gelegte Ersatzgerade 13 mit der Querebene 11 einen Winkel $\delta$ ein. Der Winkel $\delta$ ist so gewählt, daß die Ersatzgerade 13 radseitig auf die Radmittenebene 14 im Schnittpunkt von Radlängskraft L und Radseitenkraft S trifft. Von diesem Schnittpunkt ist eine Wirkungslinie 15 durch das Gelenk 6 angeordnet, längs der eine aus der Längskraft L und/oder der Seitenkraft S resultierende Kraft F auf das Gelenk 6 einwirkt. Das Gelenk 6 ist als ein elastisches Lager mit unterschiedlichen Federraten $C_1$ und $C_2$ in etwa horizontalen und zueinander etwa senkrechten Richtungen ausgebildet.

Sind ein Anstellwinkel $\alpha$ zwischen der Richtung der Federrate $C_1$ und einer Bezugsgeraden 16 in Fahrzeuglängsrichtung durch den Schnittpunkt der Federungsrichtungen und ein Richtungswinkel $\beta$ zwischen der Bezugsgeraden 16 und der resultierenden Kraft $F_{L, S}$ so gewählt, daß die Summe aus $\alpha$ und $\beta$ kleiner als 90° ist, bewirkt die resultierende Kraft $F_{L, S}$ am Anlenkpunkt des Längsarmes 3 im Lager bzw. Gelenk 6 eine Auslenkung $f_1$ und $f_2$. Bei geeigneter Wahl des Federratenverhältnisses $C_2/C_1$ ergeben beide Auslenkungen zusammen eine Verlagerung des Anlenkpunktes des Längsarmes 3 im Gelenk 6 gemäß dem Pfeil 17 entlang der Linie 18, wobei beide Querlenker 4 und 5 um ihre aufbauseitigen Anlenkungen 7 und 8 schwenken.

Aus Fig. 2 ist weiter ersichtlich, daß die Linie 18 mit der Bezugsgeraden 16 einen Auswanderungswinkel $\gamma$ einschließt. Ist dieser Winkel $\gamma$ seinem Betrag nach gleich dem Winkel zwischen der Ersatzgeraden 13 durch die Anlenkungen der Querlenker 4 und 5 und der Querebene 11 bzw. der Radachse 12 gewählt, ergibt sich für den Radträger 2 und damit auch für das Rad 1 eine translatorische Bewegung ohne Änderung einer vorgegebenen Vorspur. Vorspuränderungen am Rad 1 sind dagegen bei einer durch Längskraft L oder Seitenkraft S bewirkten elastischen Längsfederung des Rades 1 mit einem vom Winkel $\delta$ verschieden gewählten Auswanderungswinkel $\gamma$ erzielt, wobei bei $\gamma > \delta$ das Rad 1 zusätzlich in Vorspur geht.

Die Beträge für die Federraten $C_1$ und $C_2$ sind über das Federratenverhältnis $C_2/C_1$ ermittelt, das aus den Ansätzen:

$$F_1 = F \cdot \cos(\alpha + \beta);$$
$$F_2 = F \cdot \sin(\alpha + \beta) \text{ und } f_1 = F_1/C_1;$$
$$f_2 = F_2/C_2 \text{ über die Gleichung}$$
$$f_2/f_1 = \tan(\alpha - \gamma) \text{ folgt zu}$$

$$\frac{C_2}{C_1} = \frac{\tan(\alpha+\beta)}{\tan(\alpha-\beta)} .$$

Die Einzelradaufhängung nach Fig. 1 ist eine sphärische Radaufhängung. Der untere Querlenker 5 bildet in der Querebene 11 einen Ersatzlenker von einer Länge etwas größer dem halben Betrag eines Abstandes q', den der Querpol Q von den radseitigen Anlenkungen 9, 10 der Querlenker 4 und 5 aufweist. Der obere Querlenker 4 bildet einen Ersatzlenker, dessen Länge kleiner ist als die des unteren Ersatzlenkers und zwar etwa q'/2. Hierdurch wird neben einem günstigen Vorspurverhalten bei elastischer Längsfederung des Rades 1 zugleich ein günstiges Vorspurverhalten bei gewünscht kleiner Sturzänderung des Rades 1 beim Ein- und Ausfedern erzielt.

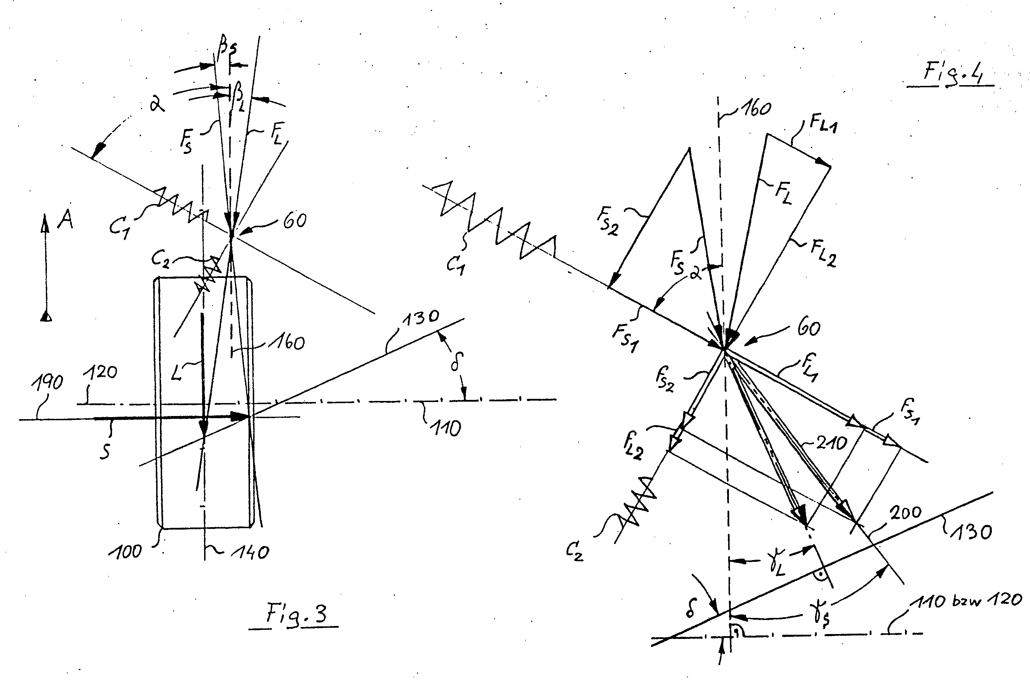

Bei der im Aufbau ähnlich der Fig. 1 gestalteten Einzelradaufhängung nach Fig. 3 schneidet sich die Ersatzgerade 130 der nicht gezeigten Querlenker mit der in Radmittenebene 140 wirkenden Radlängskraft L hinter der in Fahrtrichtung (Pfeil A) vorne gelegenen Wirkungslinie 190 der Seitenkraft S. Daraus ergeben sich zwei, in verschiedenen Richtungen am Lager des Längsarmes wirkende resultierende Kräfte $F_L$ und $F_S$.

Aus Fig. 4 geht hervor, daß der Auswanderungswinkel $\gamma_L$ unter Radlängskraft L seinem Betrag nach gleich dem Winkel $\delta$ zwischen der Ersatzgeraden 130 und der Querebene 110 bzw. der Radachse 120 ist. Somit tritt am Rad 100 bei Längskraft L keine Vorspuränderung ein, da der Radträger bzw. das Rad 100 einer translatorischen elastischen Längsfederung unterliegt.

Dagegen ist bei Radseitenkraft S über $F_S$ nach Fig. 4 eine Auswanderung des Anlenkpunktes des Längsarmes bzw. Radträgers entlang der Linie 200 gemäß Pfeil 210 erreicht, wobei der Auswanderungswinkel $\gamma_S$ größer als $\gamma_L$ ist. Damit ist eine Vorspuränderung des Rades 100 in Richtung Vorspur erreicht.

Das Gelenk der erfindungsgemäßen Einzelradaufhängung kann als eine gummielastische Drehschubfeder ausgebildet sein.

## Patentansprüche

1. Einzelradaufhängung für nicht gelenkte Räder von Kraftfahrzeugen, insbesondere Personenkraftwagen, mit einem Radträger, der

—  einen in Fahrzeuglängsrichtung gerichteten Längsarm (3) aufweist und über den Längsarm (3) sowie

—  zwei etwa quer zur Fahrzeuglängsrichtung (Pfeil »A«) weisende, übereinander angeordnete Querlenker (4 und 5) mit dem Fahrzeugaufbau gelenkig verbunden ist, wobei

—  mindestens das Gelenk (6, 60) des Längsarmes als elastisches Lager ausgebildet ist, und

— das Gelenk (6, 60) im Bereich der Radmittenebene (14, 140) angeordnet ist,
dadurch gekennzeichnet,

— daß die aufbauseitigen Anlenkungen (7, 8)
der Querlenker (4, 5) und das Gelenk (6, 60)
auf einer Seite der Radachse (12, 120) — in
Draufsicht gesehen — angeordnet sind,

— daß die radseitigen Anlenkungen (9, 10) der
Querlenker — in Draufsicht gesehen — in
etwa auf einer Ersatzgeraden (13, 130) liegen, die gemittelt durch die aufbauseitigen
Anlenkungen sowie etwa den Schnittpunkt
der Wirkungslinien von Radlängs- und Seitenkraft geht, und

— das Gelenk als ein elastisches Lager mit unterschiedlichen Federraten ($C_1$, $C_2$) in etwa
horizontalen und zueinander etwa senkrechten Richtungen ausgebildet ist, wobei

— die überwiegend quer zur Fahrzeuglängsrichtung weisende Richtung der Federrate
($C_1$) mit der am Lager bzw. Gelenk wirkenden resultierenden Kraft ($F_{L, S}$; $F_L$; $F_S$) — in
Draufsicht gesehen — einen von 90° verschiedenen Winkel einschließt.

2. Einzelradaufhängung nach Anspruch 1, dadurch gekennzeichnet, daß in Abhängigkeit

— eines Anstellwinkels ($\alpha$) zwischen der Richtung der Federrate ($C_1$) und einer Bezugsgeraden (16, 160) in Fahrzeuglängsrichtung
durch den Schnittpunkt der Federungsrichtungen von $C_1$ und $C_2$ im Lager, und

— eines Richtungswinkels ($\beta$ bzw. $\beta_L$, $\beta_S$) zwischen der Bezugsgeraden und der resultierenden Kraft ($F_{L, S}$; $F_L$; $F_S$), wobei
($\alpha + \beta$) < 90° gilt, sowie

— eines Winkels ($\gamma$ bzw. $\gamma_L$) zwischen der Bezugsgeraden und einer Auswanderungsrichtung des Längsarmes (3) im Lager,

— für das Verhältnis der Federraten

$$\frac{C_2}{C_1} = \frac{\tan(\alpha + \beta)}{\tan(\alpha - \gamma)} \text{ gilt.}$$

3. Einzelradaufhängung nach den Ansprüchen 1 und 2, mit einem in Fahrzeuglängsrichtung nach vorne weisenden Längsarm, dadurch
gekennzeichnet, daß

— beide Querlenker (4, 5) mit ihrer Ersatzgeraden (13, 130) — in Draufsicht gesehen —
sich in etwa im Schnittpunkt von Radlängskraft (L) und Seitenkraft (S) schneiden, und

— mit der Radachse (12 bzw. 120) einen Winkel
($\delta$) einschließen, der seinem Betrag nach
gleich dem Auswanderungswinkel ($\gamma$ bzw.
$\gamma_L$) des Längsarmes gewählt ist: $\gamma$ bzw.
$\gamma_L = \delta$.

4. Einzelradaufhängung nach Anspruch 3, dadurch gekennzeichnet, daß die Querlenker über
ihre Ersatzgerade mit der Radachse (12 bzw. 120)
einen Winkel ($\delta$) einschließen, der seinem Betrag nach kleiner ist als der Auswanderungswinkel
($\gamma$) : $\gamma > \delta$.

5. Einzelradaufhängung nach den Ansprüchen 1 und 2, mit einem in Fahrzeuglängsrichtung nach vorne weisenden Längsarm, dadurch
gekennzeichnet,

— daß die zu beiden Querlenkern — in Draufsicht gesehen — gemittelte Ersatzgerade
(130) sich mit der in Radmittenebene (140)
wirkenden Radlängskraft (L) — in Fahrtrichtung — hinter der Wirkungslinie (190) der
Seitenkraft (S) schneidet, wobei

— der Auswanderungswinkel ($\gamma_L$) unter Radlängskraft (L) seinem Betrag nach größer/
gleich dem Winkel ($\delta$) zwischen Radachse
(120) bzw. Querebene (110) und Ersatzgeraden gewählt sein kann: $\gamma_L \gtrless \delta$.

6. Einzelradaufhängung nach einem oder mehreren der Ansprüche, dadurch gekennzeichnet,
daß das Lager eine gummielastische Drehschubfeder ist.

7. Einzelradaufhängung nach einem oder mehreren der Ansprüche, mit einem in Fahrzeuglängsrichtung nach vorne weisenden Längsarm,
dadurch gekennzeichnet

— daß der untere Querlenker (5) in einer durch
die Radmitte vertikal verlaufenden Querebene (11 bzw. 110) einen Ersatzlenker bildet
von einer Länge etwa gleich oder größer
dem halben Betrag eines Abstandes (q'), der
von einem Querpol (Q) aus im Bereich der
Radmittenebene (14 bzw. 140) festgesetzt
ist, und

— der obere Querlenker (4) einen Ersatzlenker
bildet, dessen Länge kleiner oder gleich
dem unteren Ersatzlenker ist, wobei

— das Gelenk (6, 60) nahe der Radmittenebene
(14, 140) gewählt ist.

## Claims

1. An independent suspension for non-steered
wheels of motor vehicles, especially passenger
vehicles, with a wheel carrier which

— has a longitudinal arm (3) extending in the
longitudinal direction of the vehicle, and
which is hinged to the vehicle structure by
way of the longitudinal arm (3) and

— two superposed transverse guides (4 and 5)
extending approximately transversely of the
longitudinal direction of the vehicle (arrow
»A«),

— at least the hinge (6, 60) of the longitudinal
arm being designed as a resilient bearing,
and

— the hinge (6, 60) being arranged in the zone
of the plane (14, 140) of the wheel centre,
characterized in

— that the structure-side linkages (7, 8) of the
transverse guides (4, 5) and the hinge (6, 60) are arranged on one side of the wheel axle (12, 120) — as seen in plan view,
— that the wheel-side linkages (9, 10) of the transverse guides — as seen in plan view — lie roughly along a substitute straight line (13, 130) which on average passes through the structure-side linkages and, approximately, througth the point of intersection of the lines of action of the wheel longitudinal and lateral forces, and
— the hinge is designed as a resilient bearing with different spring rates ($C_1$, $C_2$) in roughly horizontal directions and in directions roughly at right angles to each other, whereby
— the direction of the spring rates ($C_1$), extending mainly transversely of the longitudinal direction of the vihicle, forms, with the resultant force ($F_{L, S}$; $F_L$; $F_S$) acting on the bearing or hinge, an angle other than 90° as seen in plan view.

2. An independent suspension according to claim 1, characterized in that in dependence

— upon a setting angle ($\alpha$) between the direction of the spring rate ($C_1$) and a reference straight line (16, 160) in the longitudinal direction of the vehicle and through the point of intersection of the springing directions of $C_1$ and $C_2$ in the bearing, and
— upon an angle of direction ($\beta$; $\beta_L$; $\beta_S$) between the reference straight line and the resultant force ($F_{L, S}$; $F_L$; $F_S$), ($\alpha + \beta$) being < 90°, as well as
— upon an angle ($\gamma$; $\gamma_L$) between the reference straight line and a direction in which the longitudinal arm (3) deflects in the bearing,
— the ratio of the spring rates is

$$\frac{C_2}{C_1} = \frac{\tan(\alpha + \beta)}{\tan(\alpha - \gamma)}$$

3. An independent suspension according to claims 1 and 2 and having a longitudinal arm extending forwardly in the longitudinal direction of the vehicle, characterized in that

— seen in plan view — the two transverse guides (4, 5) intersect by their substitute straight lines (13, 130) roughly at the point of intersection of the wheel longitudinal force (L) and the lateral force (S), and
— form with the wheel axle (12; 120) an angle ($\delta$) which, depending upon its magnitude, is selected to equal the angle of deflection ($\gamma$; $\gamma_L$) of the longitudinal arm: $\gamma$; $\gamma_L = \delta$.

4. An independent suspension according to claim 3, characterized in that, by way of their substitute straight lines, the transverse guides form with the wheel axle (12, 120) an angle ($\delta$), the magnitude of which is smaller than the deflection angle ($\gamma$) : $\gamma > \delta$.

5. An independent suspension means according to claims 1 and 2 and having a longitudinal arm extending forwardly in the longitudinal direction of the vehicle, characterized in

— that the substitute straight line (130) averaged over the two transverse guides — as seen in plan view — intersects with the wheel longitudinal force (L) acting in the plane (140) of the wheel centre — in the direction of travel — to the rear of the line of action (190) of the lateral force (S), whereby
— under the wheel longitudinal force (L), the magnitude of the deflection angle ($\gamma_L$) can be selected to be greater than/equal to the angle ($\delta$) between the wheel axle (120) or transverse plane (110) and the substitute straight line: $\gamma_L \geq \delta$.

6. An independent suspension according to any one or more of the preceding claims, characterized in that the bearing is an elastic torsion spring.

7. An independent suspension according to any one or more of the preceding claims and having a longitudinal arm extending forwardly in the longitudinal direction of the vehicle, characterized in

— that the lower transverse guide (5) forms a substitute guide in a transverse plane (11; 110) exteding vertically through the centre of the wheel and has a length roughly equal to or greater than half the amount of a distance (q') which is determined as extending from a transverse pole (Q) in the zone of the plane (14; 140) through the wheel centre, and
— the upper transverse guide (4) forms a substitute guide the length of which is less than or equal to the lower substitute guide,
— the hinge (6, 60) being near the plane (14, 140) extending through the wheel centre.

## Revendications

1. Suspension indépendante pour roues non directrices de véhicules à moteur, notamment automobiles de tourisme, avec un support de roue qui comprend un bras longitudinal (3) orienté en direction longitudinale du véhicule, ainsi que deux bielles transversales (4 et 5) disposées l'une au-dessus de l'autre, orientées transversalement à la direction de marche du véhicule (flèche »A«), par l'intermédiaire desquelles le bras (3) est relié à articulation à la carrosserie du véhicule, auquel cas l'articulation (6, 60) du bras longitudinal (3) est constituée par un palier élastique, cette articulation (6, 60) étant disposée dans le plan du centre de la roue (14, 140), suspension caractérisée en ce que:

— les articulations (7, 8) des bielles transversales (4, 5) du côté carrosserie et l'articulation (6, 60) sont disposées sur un côté de l'axe de la roue (12, 120) dans une vue en plan,

— les articulations côté roue (9, 10) des bielles transversales vues en plan se trouvent sur une droite de remplacement (13, 130) qui passe par les articulations côté carrosserie, ainsi que par le point d'intersection des lignes d'action de la force longitudinale et de la force latérale à la roue,

— l'articulation étant constituée par un palier élastique présentant des taux d'élasticité de ressort différents ($C_1$ et $C_2$) en directions horizontales et directions perpendidulaires entre elles,

— de telle sorte que la direction du taux d'élasticité ($C_1$) orientée en majorité transversalement à la direction longitudinale du véhicule, forme, vue en plan, avec la force résultante agissant sur le palier ou articulation ($F_{L; S}$; $F_L$, $F_S$), un angle différent de 90 degrés.

2. Suspension indépendante suivant la revendication 1, caractérisée en ce que le rapport entre les taux d'élasticité:

$$\frac{C_2}{C_1} = \frac{\text{tge}\,(\alpha+\beta)}{\text{tge}\,(\alpha-\gamma)}$$

est établi en fonction des facteurs suivants:

— un angle de réglage de position ($\alpha$) entre la direction du taux d'elasticité ($C_1$) et une droite de référence (16, 160) s'étendant en direction longitudinale du véhicule et passent par le point d'intersection des directions d'élasticité de ($C_1$) et de ($C_2$) dans le palier,

— un angle de direction ($\beta$ .. $\beta_i$; $\beta_s$) entre la droite de référence et la force résultante ($F_{L.S}$; $F_L$; $F_S$) auquel cas $\alpha + \beta < 90°$,

— un angle $\gamma$ ($\beta$ .. $\beta_i$; $\beta_s$) entre la droite de référence et une direction de déplacement vers l'extérieur du bras longitudinal (3) dans le palier.

3. Suspension indépendante suivant l'une des revendications 1 et 2, avec un bras longitudinal, orienté vers l'avant en direction de marche du véhicule, caractérisée en ce que les deux bielles transversales (4, 5) se recoupent, avec leurs droites de remplacement (13, 130), vues en plan, au point d'intersection de la force longitudinale (L) et de la force latérale à la roue (S) en formant, avec l'axe de roue (12, 120) un angle ($\delta$) qui est choisi d'une valeur égale à l'angle de déplacement ($\gamma$ ou $\gamma_L$) du bras longitudinal ($\gamma$ ou $\gamma_L$ = $\delta$).

4. Suspension indépendante suivant la revendication 3, caractérisée en ce que les bielles transversales, par leur droite de remplacement, forment avec l'axe de roue (12; 120) un angle ($\delta$) de valeur inférieure à l'angle de déplacement ($\gamma$) : ($\gamma > \delta$).

5. Suspension indépendante suivant l'une des revendications 1 et 2 avec un bras longitudinal orienté vers l'avant en direction longitudinale du véhicule, caractérisée en ce que la droite de remplacement (130) affecté, dans une vue en plan, aux deux bielles transversales, se recoupe avec la force longitudinale à la roue (L) agissant dans le plan de son centre (140), en direction de la marche, derrière la ligne d'action (190) de la force latérale (S), l'angle de déplacement vers l'extérieur ($\gamma_L$) sous l'effet d'une force longitudinale (L) étant égal ou supérieur à l'angle ($\delta$) entre axe de roue (20) ou plan transversal (110) et la droite de remplacement, c'est-à-dire est choisi tel que $\gamma_L \geq \delta$.

6. Suspension indépendante suivant l'une quelconque des revendications 1 à 5, caractérisée en ce que le palier est un ressort de torsion de poussée à élasticité de caoutchouc.

7. Suspension indépendante suivant l'une quelconque des revendications 1 à 6, avec un bras longitudinal orienté vers l'avant en direction longitudinale du véhicule, caractérisée en ce que:

— la bielle transversale inférieure (4) forme, dans un plan transversale (11, 110) s'étendant verticalement par le centre de roue, une bielle de substitution d'une longueur égale ou supérieure à la moitié de la distance (q'), déterminée à partir d'un pôle transversal (Q) dans un plan passant par le centre de roue (14, 140),

— la bielle transversale supérieure (5) formant une bielle de substitution dont la longueur est inférieure ou égale à celle de la bielle inférieure,

— l'articulation (6, 60) étant choisie proche du plan de centre de roue (14, 140).

Fig.1

Fig.2

$(\alpha + \beta) < 90°$

7

Fig. 3

Fig. 4

0 052 153